# FASCICULE DE BREVET EUROPEEN

(11) **EP 2 632 788 B1**
(45) Date de publication et mention de la délivrance du brevet: **24.08.2016**
(21) Numéro de dépôt: 11776145.2
(22) Date de dépôt: 20.10.2011
(51) Int. Cl.: B62D 21/11, B62D 21/15

(54) **AGENCEMENT POUR LA LIAISON ENTRE UN BERCEAU ET LES LONGERONS**
ANORDNUNG ZUR VERBINDUNG EINES TRÄGERS MIT SEITENSCHIENEN
ARRANGEMENT FOR CONNECTING A CRADLE AND SIDE RAILS TOGETHER

(30) Priorité: 25.10.2010 FR 1058709
(43) Date de publication de la demande: 04.09.2013
(73) Titulaire: Renault S.A.S., 92100 Boulogne-Billancourt (FR)
(72) Inventeur: DA COSTA PITO, Gil, F-78330 Fontenay-Le-Fleury (FR); ROLLET, Rémi, F-91190 Gif-Sur-Yvette (FR)
(86) Numéro de dépôt international: PCT/EP2011/068351
(87) Numéro de publication internationale: WO 2012/055760

(56) Documents cités:
- EP-A1- 1 081 023
- EP-A1- 2 050 597
- US-A1- 2007 278 778

## Description

L'invention concerne un agencement de la structure avant d'un véhicule automobile permettant de lier un berceau aux longerons latéraux. Elle concerne aussi un véhicule automobile en tant que tel comprenant un tel agencement.

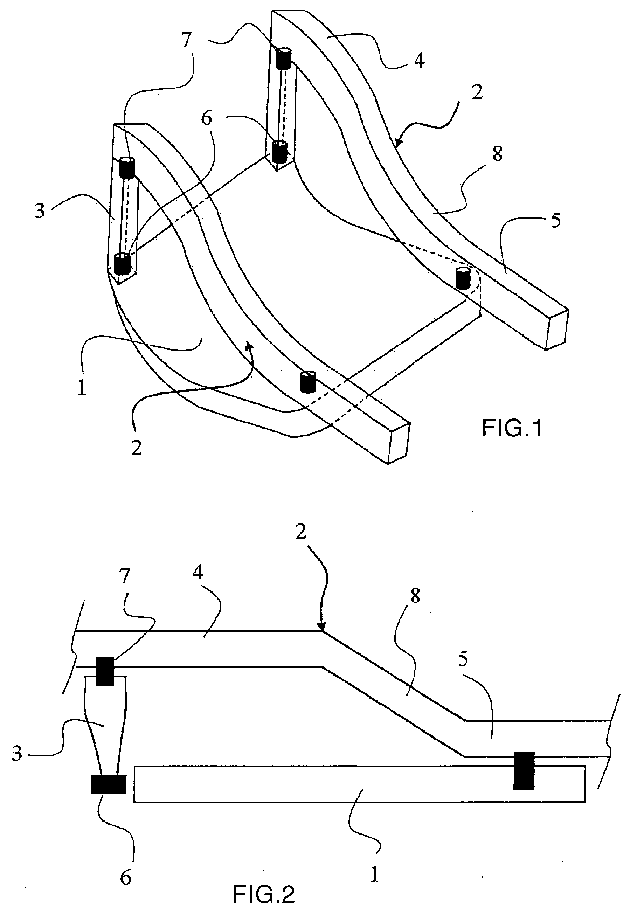

De l'état de la technique antérieur on connait le document EP1081023 A1 divulguant un agencement pour véhicule automobile, comprenant un berceau relié à des longerons par l'intermédiaire d'au moins une corne à l'avant, la corne se fixant sur le coude de longeron par le biais d'un moyen de fixation. Une structure avant habituelle de véhicule automobile, illustrée schématiquement sur la figure 1, comprend deux longerons latéraux symétriques 2 s'étendant dans la direction longitudinale et reliés par un berceau 1, les parties antérieures 4 des longerons 2 étant relevées pour supporter les attaches du groupe moto-propulseur alors que ses parties arrières 5 sont plus basses pour s'étendre longitudinalement sous la carcasse de l'habitacle du véhicule. Le berceau 1 est relié à la partie antérieure 4 de chaque longeron 2 par des cornes 3, reliées dans leur partie inférieure par une première liaison 6 au berceau 1 et dans leur partie supérieure par une seconde liaison 7 aux longerons 2.

Dans ce type de structure, les longerons 2 comprennent habituellement un coude 8. Les cornes 3 reliant le berceau 1 aux longerons 2 s'étendent habituellement suivant un axe vertical et elles sont fixées d'une part à l'avant du berceau et d'autre part sur la partie avant 4 horizontale du longeron, devant le coude 8.

L'inconvénient de ce type de montage est qu'il occasionne des contacts entre les cornes et la transmission et/ou la boîte de vitesses lors d'un choc, ce qui induit une dégradation de ces composants du véhicule automobile.

L'objet de la présente invention consiste à proposer un nouvel agencement de liaison d'un berceau sur les longerons évitant les contacts entre les cornes et la transmission et/ou la boîte de vitesses en cas de choc.

L'invention repose sur un agencement pour véhicule automobile, comprenant un berceau relié à des longerons par l'intermédiaire d'au moins une corne à l'avant, la corne se fixant sur le coude de longeron par le biais d'un moyen de fixation caractérisé en ce que ledit moyen de fixation peut avoir pour axe principal, un axe perpendiculaire au coude de longeron.

Le moyen de fixation peut être constitué d'une vis traversant la corne et d'un écrou solidaire du coude de longeron. L'écrou peut être soudé au coude de longeron.

La liaison entre la corne et le berceau peut être une pièce susceptible de déformation et/ou rupture. Cette pièce susceptible de déformation et/ou rupture peut avoir une forme de chape permettant la fixation de la corne par au moins un moyen de fixation.

Le au moins un moyen de fixation peut maintenir un collier de barre antiroulis.

La pièce susceptible de déformation et/ou rupture peut assurer elle-même le maintien de la barre antiroulis.

Le moyen de fixation peut être une pièce susceptible de déformation et/ou rupture s'étendant vers l'arrière.

La pièce susceptible de déformation et/ou rupture peut avoir une extrémité avant fixée sur la corne sensiblement selon l'axe vertical, l'autre extrémité étant fixée sur le coude du longeron par au moins un moyen de fixation d'axe perpendiculaire au coude de longeron.

Deux moyens de fixation peuvent être utilisés, leurs axes étant perpendiculaires l'un de l'autre, l'un étant transversal.

La ou les pièces susceptibles de déformation et/ou rupture peuvent être en un matériau susceptible de rupture comprenant de l'aluminium.

La ou les pièces susceptibles de déformation et/ou rupture peuvent être tarées à des efforts prédéterminés.

L'invention porte aussi sur un véhicule automobile comprenant un agencement tel que décrit précédemment.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente une vue en perspective schématique d'un agencement d'un berceau sur un longeron de l'état de la technique.
La figure 2 représente une vue schématique de côté des liaisons d'une corne avec d'une part un berceau et d'autre part un longeron selon l'état de la technique.
Les figures 3 et 4 représentent respectivement une vue schématique et détaillée de côté d'un moyen de fixation d'une corne sur un longeron selon l'invention.
Les figures 5 et 6 représentent des vues en perspective illustrant une liaison d'une corne sur un berceau selon l'invention.
La figure 7 représente une vue schématique de côté des liaisons d'une corne avec d'une part un berceau et d'autre part un longeron selon l'invention.
La figure 8 représente une vue schématique de côté d'une corne se fixant sur la partie arrière du coude de longeron selon l'invention.

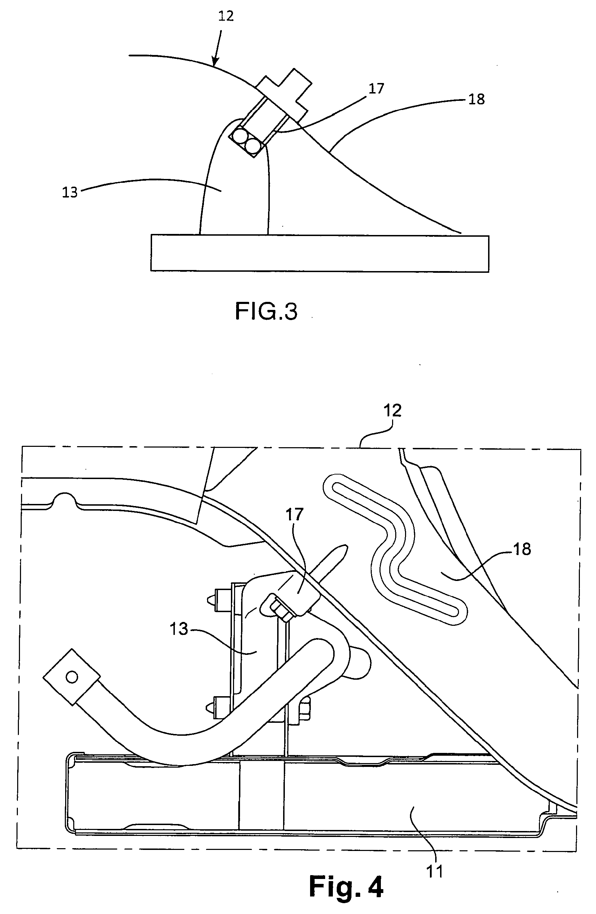

Les figures 3 à 8 illustrent des modes de réalisation de l'invention et les mêmes références sont utilisées pour désigner des éléments correspondants. Nous entendrons par direction longitudinale la direction dans le sens du véhicule automobile, de l'arrière vers l'avant. Nous entendrons par direction transversale une direction horizontale et perpendiculaire à la direction longitudinale. Enfin, nous entendrons par direction verticale la direction perpendiculaire aux deux précédentes qui définissent un plan horizontal.

Selon l'invention, les liaisons des cornes sur les longerons sont reculées. Ainsi les moyens de fixation des cornes sur les longerons sont prévus au niveau des coudes respectifs de chaque longeron.

Les figures 3 et 4 illustrent une solution dans laquelle le moyen de fixation 17 de la corne 13 sur le longeron 12 est positionné sur le coude 18 de longeron, l'axe principal de ce moyen de fixation 17 étant sensiblement perpendiculaire au coude de longeron. Le moyen de fixation 17 peut comprendre un assemblage vis/écrou, ou encore un axe, épaulé ou non, rendu solidaire du coude de longeron ou de la corne par tout moyen tel qu'une soudure. Afin de faciliter l'assemblage et de limiter l'encombrement de ce moyen de fixation 17 sur le coude de longeron, un écrou est rendu solidaire du coude de longeron, par exemple par une opération de soudage, une vis traversant alors la corne.

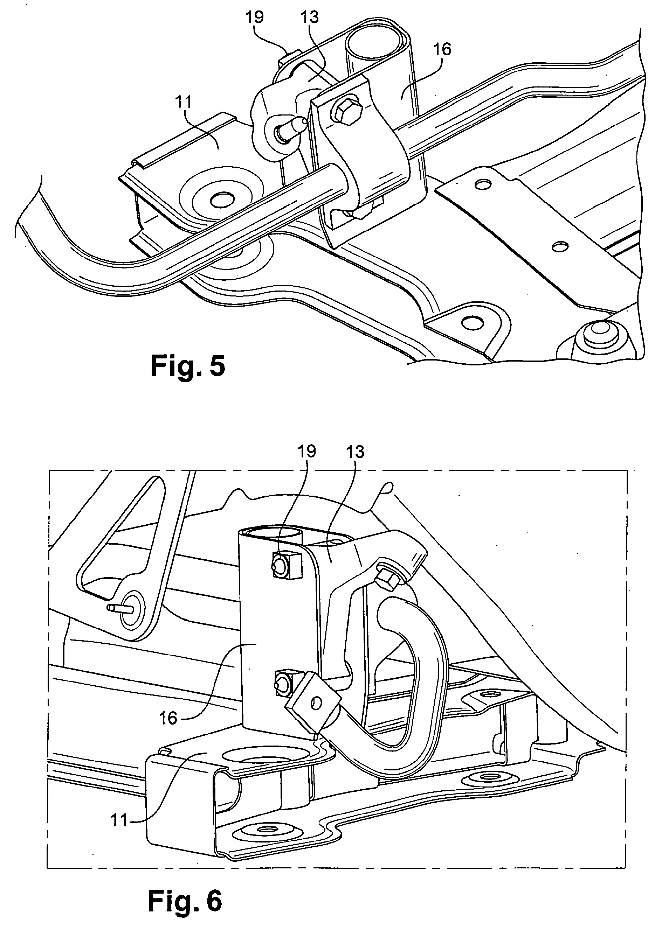

Les figures 5 et 6 illustrent la liaison entre les cornes 13 et le berceau 11. La fixation d'une corne 13 sur le berceau 11 est assurée par l'intermédiaire d'une pièce 16 susceptible de déformation et/ou rupture, sécable, cassable ou encore pourvue d'au moins une zone de rupture. De préférence, mais pas de manière limitative, cette pièce 16 comprendra de l'aluminium tel qu'un alliage d'aluminium dont la déformation ou la rupture sera tarée à un effort prédéterminé permettant d'atteindre le but de l'invention.

La pièce 16 peut avoir une forme de chape afin de maintenir la corne par au moins un moyen de fixation 19 traversant à la fois les deux plaques de la chape et la corne. Ce moyen de fixation 19 est un ensemble vis/écrou, un axe épaulé avec une goupille ou tout autre moyen similaire. Au moins un de ces moyens de fixation 19 de la corne sur la pièce 16 peut également assurer la fixation d'un collier de barre antiroulis.

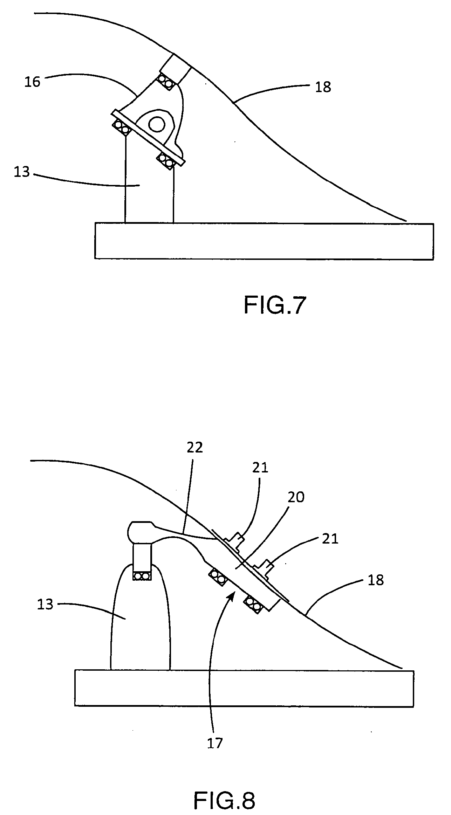

En référence à la figure 7, la pièce 16 peut elle-même faire office de collier de barre antiroulis.

Il peut aussi être prévu qu'une pièce 20 s'étendant vers l'arrière, susceptible de déformation et/ou rupture, sécable, cassable ou encore pourvue d'au moins une zone de rupture 22, constitue l'interface entre la corne 13 et le coude 18 de longeron. La figure 8 illustre une pièce 20, fixée d'une part sur une corne 13 selon un axe sensiblement vertical, et d'autre part à un coude 18 de longeron par au moins un moyen de fixation 21 selon au moins un axe perpendiculaire au coude de longeron. Dans ce mode de réalisation, au moins un moyen de fixation 21 tel qu'un système vis/écrou, un rivet, un axe fileté épaulé et/ou soudé, ou tout autre moyen de serrage ou de maintien, est placé dans la partie arrière du coude 18 de longeron afin de ne pas contrarier la déformation du longeron 12 en cas de choc. Dans un tel agencement, la fixation entre la corne et le berceau se fait en porte à faux sur l'avant. En cas de pluralité de moyens de fixation 21 entre la pièce 20 et le coude 18 de longeron, les axes de ces derniers peuvent être perpendiculaires l'un par rapport à l'autre, par exemple un axe pourra être transversal, tout en étant perpendiculaires au coude de longeron. En cas d'utilisation de système vis/écrou pour au moins un moyen de fixation 21 entre la pièce 20 et le coude 18 de longeron, au moins un écrou peut être solidaire du coude de longeron par exemple par soudure.

Ces solutions atteignent donc bien l'objet recherché et présentent les avantages suivants :
- la probabilité que les cornes entrent en contact avec la transmission ou la boîte de vitesses lors d'un choc est amoindrie, les cornes étant reculées ;
- la présence d'au moins une pièce susceptible de déformation et/ou rupture permet de mieux maîtriser la déformation en cas de choc de l'ensemble berceau, cornes et longerons, notamment si l'une au moins de ces pièces est tarée à un effort prédéterminé ;
- l'utilisation d'au moins un écrou solidaire sur chaque coude de longeron pour la fixation des cornes permet de supprimer les pièces intermédiaires de type boîtiers fixés habituellement par une pluralité de vis sur chaque longeron, ce qui diminue le nombre de pièces à monter et simplifie ainsi l'assemblage. La soudure, simplifiant le ferrage, peut également être utilisée ;
- les pièces susceptibles de déformation et/ou rupture pouvant faire elles-mêmes office de colliers de barre antiroulis, les colliers sont supprimés ce qui diminue le nombre de pièces à monter et simplifie ainsi l'assemblage.

## Revendications

1. Agencement pour véhicule automobile, comprenant un berceau (11) relié à des longerons (12) par l'intermédiaire d'au moins une corne (13) à l'avant, la corne (13) se fixant sur un coude (18) de longeron par le biais d'un moyen de fixation (17), **caractérisé en ce que** ledit moyen de fixation (17) a pour axe principal, un axe perpendiculaire au coude (18) de longeron.

2. Agencement pour véhicule automobile selon la revendication 1, **caractérisé en ce que** le moyen de fixation (17) est constitué d'une vis traversant la corne (13) et d'un écrou solidaire du coude (18) de longeron.

3. Agencement pour véhicule automobile selon la revendication 2, **caractérisé en ce que** l'écrou est soudé au coude (18) de longeron.

4. Agencement pour véhicule automobile selon l'une quelconque des revendications précédentes, **caractérisé en ce que** la liaison entre la corne (13) et le berceau (11) est une pièce (16) susceptible de déformation et/ou rupture.

5. Agencement pour véhicule automobile selon la revendication 4, **caractérisé en ce que** la pièce (16) susceptible de déformation et/ou rupture a une forme de chape permettant la fixation de la corne (13) par au moins un moyen de fixation (19).

6. Agencement pour véhicule automobile selon la revendication 5, **caractérisé en ce qu'**au moins un moyen de fixation (19) maintient un collier de barre antiroulis.

7. Agencement pour véhicule automobile selon l'une des revendications 4 ou 5, **caractérisé en ce que** la pièce (16) susceptible de déformation et/ou rupture assure elle-même le maintien de la barre antiroulis.

8. Agencement pour véhicule automobile selon la revendication 1 **caractérisé en ce que** le moyen de fixation (17) est une pièce (20) susceptible de déformation et/ou rupture s'étendant vers l'arrière.

9. Agencement pour véhicule automobile selon la revendication 8 **caractérisé en ce que** la pièce (20) susceptible de déformation et/ou rupture a une extrémité avant fixée sur la corne (13) sensiblement selon l'axe vertical, l'autre extrémité étant fixée sur le coude (18) du longeron par au moins un moyen de fixation (21) d'axe perpendiculaire au coude (18) de longeron.

10. Agencement pour véhicule automobile selon la revendication 9 **caractérisé en ce que** deux moyens de fixation (21) sont utilisés, leurs axes étant perpendiculaires l'un de l'autre, l'un étant transversal.

11. Agencement pour véhicule automobile selon l'une des revendications 4 à 10 **caractérisé en ce que** la ou les pièces susceptibles de déformation et/ou rupture (16, 20) sont en un matériau susceptible de rupture comprenant de l'aluminium.

12. Agencement pour véhicule automobile selon la revendication 11 **caractérisé en ce que** la ou les pièces susceptibles de déformation et/ou rupture (16, 20) sont tarées à des efforts prédéterminés.

13. Véhicule automobile comprenant un agencement selon l'une quelconque des revendications précédentes.

## Patentansprüche

1. Anordnung für ein Kraftfahrzeug, die einen Hilfsträger (11) umfasst, der vorne mit Hilfe von mindestens einem Horn (13) mit Längsträgern (12) verbunden ist, wobei das Horn (13) mittels eines Befestigungsmittels (17) an einer Längsträgerkrümmung (18) befestigt ist, **dadurch gekennzeichnet, dass** das Befestigungsmittel (17) als Hauptachse eine Achse hat, die lotrecht zu der Längsträgerkrümmung (18) ist.

2. Anordnung für ein Kraftfahrzeug nach Anspruch 1, **dadurch gekennzeichnet, dass** das Befestigungsmittel (17) aus einer das Horn (13) durchdringenden Schraube einer einstückig mit der Längsträgerkrümmung (18) ausgebildeten Mutter besteht.

3. Anordnung für ein Kraftfahrzeug nach Anspruch 2, **dadurch gekennzeichnet, dass** die Mutter mit der Längsträgerkrümmung (18) verschweißt ist.

4. Anordnung für ein Kraftfahrzeug nach einem der vorhergehenden Ansprüche, **dadurch gekennzeichnet, dass** die Verbindung zwischen dem Horn (13) und dem Hilfsträger (11) ein verformbares und/oder zerbrechliches Teil (16) ist.

5. Anordnung für ein Kraftfahrzeug nach Anspruch 4, **dadurch gekennzeichnet, dass** das verformbare und/oder zerbrechliche Teil (16) gabelförmig ist und die Befestigung des Horns (13) mit Hilfe von mindestens einem Befestigungsmittel (19) erlaubt.

6. Anordnung für ein Kraftfahrzeug nach Anspruch 5, **dadurch gekennzeichnet, dass** mindestens ein Befestigungsmittel (19) einen Stabilisatorring hält.

7. Anordnung für ein Kraftfahrzeug nach einem der Ansprüche 4 oder 5, **dadurch gekennzeichnet, dass** das verformbare und/oder zerbrechliche Teil (16) selbst das Halten des Stabilisators gewährleistet.

8. Anordnung für ein Kraftfahrzeug nach Anspruch 1, **dadurch gekennzeichnet, dass** das Befestigungsmittel (17) ein verformbares und/oder zerbrechliches Teil (20) ist, das sich nach hinten erstreckt.

9. Anordnung für ein Kraftfahrzeug nach Anspruch 8, **dadurch gekennzeichnet, dass** das verformbare und/oder zerbrechliche Teil (20) ein vorderes Ende hat, das im Wesentlichen entlang der vertikalen Achse an dem Horn (13) befestigt ist, wobei das andere Ende mit Hilfe von mindestens einem Befestigungsmittel (21), dessen Achse lotrecht zu der Längsträgerkrümmung (18) ist, an der Längsträgerkrümmung (18) befestigt ist.

10. Anordnung für ein Kraftfahrzeug nach Anspruch 9, **dadurch gekennzeichnet, dass** zwei Befestigungsmittel (21) verwendet werden, deren Achsen zueinander lotrecht sind, wobei die eine quer verläuft.

11. Anordnung für ein Kraftfahrzeug nach einem der Ansprüche 4 bis 10, **dadurch gekennzeichnet, dass** das oder die verformbaren und/oder zerbrechlichen Teile (16, 20) aus einem zerbrechlichen Material gefertigt sind, das Aluminium umfasst.

12. Anordnung für ein Kraftfahrzeug nach Anspruch 11, **dadurch gekennzeichnet, dass** das oder die verformbaren und/oder zerbrechlichen Teile (16, 20) auf vorbestimmte Beanspruchungen geeicht sind.

13. Kraftfahrzeug mit einer Anordnung nach einem der vorhergehenden Ansprüche.

## Claims

1. Arrangement for a motor vehicle, comprising a cradle (11) connected to side rails (12) by means of at least one horn (13) at the front, the horn (13) being attached to a side rail elbow (18) via a fastening means (17), said **characterized in that** the said fastening means (17) has as its main axis an axis perpendicular to the side rail elbow (18).

2. Arrangement for a motor vehicle according to Claim 1, **characterized in that** the fastening means (17) consists of a bolt passing through the horn (13) and of a nut secured to the side rail elbow (18).

3. Arrangement for a motor vehicle according to Claim 2, **characterized in that** the nut is welded to the side rail elbow (18).

4. Arrangement for a motor vehicle according to any one of the preceding claims, **characterized in that** the connection between the horn (13) and the cradle (11) is a component (16) capable of deforming and/or of breaking.

5. Arrangement for a motor vehicle according to Claim 4, **characterized in that** the component (16) capable of deforming and/or breaking is in the shape of a yoke allowing attachment of the horn (13) via at least one fastening means (19).

6. Arrangement for a motor vehicle according to Claim 5, **characterized in that** at least one fastening means (19) holds an antiroll bar saddle.

7. Arrangement for a motor vehicle according to one of Claims 4 and 5, **characterized in that** the component (16) capable of deforming and/or breaking itself holds the antiroll bar.

8. Arrangement for a motor vehicle according to Claim 1, **characterized in that** the fastening means (17) is a component (20) capable of deforming and/or breaking extending toward the rear.

9. Arrangement for a motor vehicle according to Claim 8, **characterized in that** the component (20) capable of deforming and/or breaking has a front end fixed to the horn (13) substantially along the vertical axis, the other end being fixed to the elbow (18) of the side rail by at least one fastening means (21) the axis of which is perpendicular to the side rail elbow (18).

10. Arrangement for a motor vehicle according to Claim 9, **characterized in that** two fastening means (21) are used, their axes being perpendicular to one another, one being transverse.

11. Arrangement for a motor vehicle according to one of Claims 4 to 10, **characterized in that** the component or components (16, 20) capable of deforming and/or breaking are made of a material capable of breaking containing aluminum.

12. Arrangement for a motor vehicle according to Claim 11, **characterized in that** the component or components (16, 20) capable of deforming and/or breaking are rated for predetermined loads.

13. Motor vehicle comprising an arrangement according to any one of the preceding claims.
